# EUROPÄISCHE PATENTSCHRIFT

(11) **EP 0 609 525 B1**
(45) Veröffentlichungstag und Bekanntmachung des Hinweises auf die Patenterteilung: **15.10.1997**
(21) Anmeldenummer: 93119871.7
(22) Anmeldetag: 09.12.1993
(51) Int. Cl.: G01L 9/00, G01L 23/18

(54) **Drucksensor**
Pressure sensor
Capteur de pression

(30) Priorität: 03.02.1993 DE 4303011
(43) Veröffentlichungstag der Anmeldung: 10.08.1994
(73) Patentinhaber: ROBERT BOSCH GMBH, 70442 Stuttgart (DE)
(72) Erfinder: Schmid, Kurt, D-71254 Ditzingen (DE); Heinz, Rudilf, Dr. Dipl.-Ing., D-71272 Renningen (DE); Wendel, Juergen, D-70449 Stuttgart (DE); Haug, Ralf, Dr. Dipl.-Phys., D-71229 Leonberg (DE)

(56) Entgegenhaltungen:
- EP-A- 0 179 278
- DE-A- 2 110 522

## Beschreibung

### Stand der Technik

Die Erfindung geht aus von einem Drucksensor nach der Gattung der beiden unabhängigen Ansprüche. Bei einem derartigen z.B. aus der EP-A-0 290 470 bekannten Drucksensor ist das Meßelement in eine Sacklochbohrung des Gehäuses eingesetzt. Das Meßelement besteht hierbei aus einem Schichtwiderstand, der auf einer Stirnseite eines als Träger dienenden Stempels angeordnet ist. Zwischen dem Schichtwiderstand und der Innenseite des Bodens der Sacklochbohrung ist ein balliges, druckeinleitendes Bauteil angeordnet. Hierbei können Unebenheiten der Innenseite der Sacklochbohrung ausgeglichen werden. Diese Bauweise reicht aber für eine kostengünstige Herstellung bei gleichzeitiger Beibehaltung einer nahezu linearen Meßkurve nicht aus.

Ferner ist aus der DE-OS 35 28 768.3 ein Drucksensor bekannt, bei dem der Stempel ein Schraubgewinde aufweist. Hierbei kann zwar das Meßelement mit der Druckschraube vormontiert und als Einheit in das Sensorgehäuse eingeschraubt werden. Toleranzunterschiede und Winkelfehler können aber hier zu Meßfehlern führen.

### Vorteile der Erfindung

Der erfindungsgemäße Drucksensor mit den Merkmalen der beiden unabhängigen Ansprüche hat demgegenüber den Vorteil, daß eine sehr genaue Druckeinleitung bzw. Druckübertragung auf das druckempfindliche Element möglich ist. Bei einfacher und kostengünstiger Bauweise wird eine nahezu lineare Meßkurve erreicht. Mit Hilfe des federnden Bereichs des Stempels bzw. des federnden Einsetzteils wird die durch die Druckschraube aufgebrachte relativ hohe Vorspannkraft erhalten, wobei gleichzeitig Schiefstellungen des Stempels und der vorhandenen Trennstellen bzw. Kontaktstellen ausgeglichen werden können. Trotz der Schiefstellung insbesondere des Stempels ist eine definierte Krafteinleitung über die Mitte des Sensorelements möglich. Trotz rauher Oberflächen der verschiedenen Kontaktstellen, die aus Kostengründen nicht geschliffen oder geläppt werden, sind nahezu hysteresefreie lineare Meßkurven möglich.

Durch die in den abhängigen Patentansprüchen aufgeführten Maßnahmen sind vorteilhafte Weiterbildungen des in den unabhängigen Ansprüchen angegebenen Drucksensors möglich.

### Zeichnung

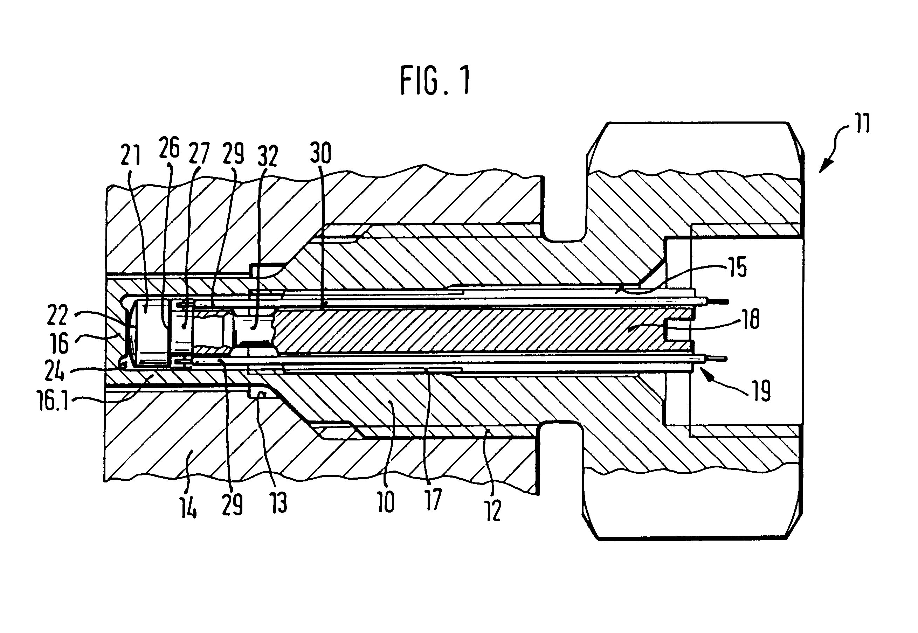

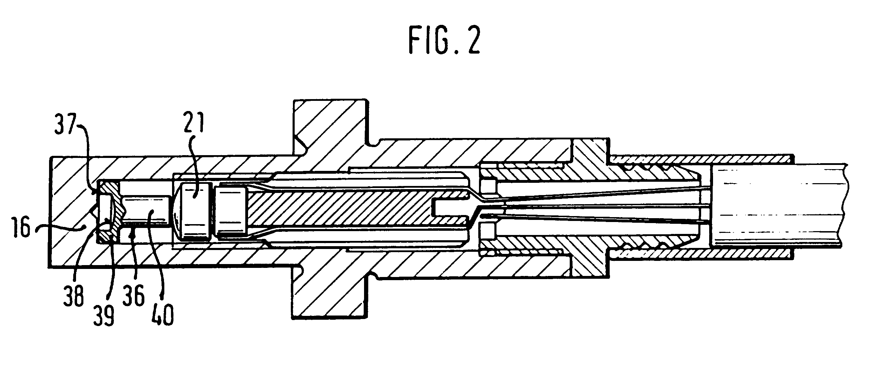

Ausführungsbeispiele der Erfindung sind in der Zeichnung dargestellt und in der nachfolgenden Beschreibung näher erläutert. Es zeigen Figur 1 einen Längsschnitt durch einen Drucksensor und Figur 2 einen Längsschnitt durch ein zweites Ausführungsbeispiel.

### Beschreibung der Ausführungsbeispiele

In Figur 1 ist mit 10 das Gehäuse eines Drucksensors 11 bezeichnet, das als Schraube oder in Schraubenform ausgebildet ist. Das Gehäuse 10 ist mit Hilfe eines Außengewindes 12 in eine Bohrung 13 der Wandung 14 eines nicht näher dargestellten Druckbehälters eingesetzt und schließt etwa bündig mit der Wandung 14 ab. Das Gehäuse 10 kann auch über die Wandung 14 hinaus in das Medium hineinragen, dessen Druck bzw. Druckvariation gemessen werden soll. Es ist aber ebenso denkbar, daß das Gehäuse 10 nicht über die Bohrung 13 hinausreicht und somit zurückgesetzt und geschützt in der Bohrung 13 angeordnet ist. Das Gehäuse 10 weist eine mittige Sacklochbohrung 15 auf, deren Boden 16 und Seitenwand 16.1 als Druckübertrager ausgebildet sind. Die Wand der Bohrung 15 weist in einem Teilbereich ein Gewinde 17 auf, mit dessen Hilfe der Stempel 18 eines Meßelements 19 in der Sacklochbohrung 15 befestigt ist. Das Meßelement 19 weist ein Druckübertragungselement 21 auf, dessen ballig geformte Stirnseite 22 an der Innenseite des Bodens 16 anliegt. Das Element 21 kann als Halbkugel oder mit einer gekrümmten Oberfläche ausgebildet sein. Wichtig ist, daß bei Beginn der Vorspannung eine nahezu punktförmige mittige Auflage des Elements 21 auf dem Boden 16 vorhanden ist. Das Element 21 selbst besteht aus einem harten Werkstoff, vorzugsweise gehärtetem Stahl oder Keramik. Um eine höhere Dauerfestigkeit des Bodens 16 zu ermöglichen, ist im Boden 16 eine ringförmige Vertiefung 24 ausgebildet. Diese ist aber nicht in allen Fällen notwendig. Auf die dem Boden 16 abgewandte Stirnseite des Elements 21 ist ein Schichtwiderstand 26 aufgebracht. Dieser Widerstand 26 besteht z.B. aus einem Dickschichtwiderstand und ist in herkömmlich bekannter Weise in Dickschichttechnik aufgedruckt. Es kann aber auch die Dünnschichttechnik verwendet werden. Selbstverständlich ist es auch möglich, mehrere Schichtwiderstände vorzusehen. An die Widerstandsschicht 26 schließt sich der Träger 27 der Widerstandsschicht 26 an. Der Träger 27 besteht ebenfalls aus einem Keramiksubstrat. Um ihn preisgünstig herstellen zu können, weist er z.B. eine Dicke von 1 mm auf. Dadurch ist es möglich, die Träger 27 in einem sogenannten Nutzen herzustellen und mit einem Laserstrahl aus dem Nutzen herauszuschneiden. Die Widerstandsbahnen 26 sind über Leiterbahnen, z.B. Silber-Paladium, mit den Enden von Leitungsdrähten 29 kontaktiert, die durch Längsnuten 30 des Stempels 18 zu einem nicht dargestellten elektrischen Anschlußteil oder einer Auswerteschaltung führen.

An der dem Widerstand 26 abgewandten Stirnseite des Trägers 27 liegt der Stempel 18 an. In einem Bereich kurz hinter der Kontaktierungsstelle mit dem Träger 27 weist der Stempel 18 eine Verjüngung 32 auf, durch die der Stempel 18 in diesem Bereich federnde bzw. in Richtung quer zur Längsachse des Stempels 18 elastische Eigenschaften erhält. Das Gewinde 17 des Stempels 18 reicht insbesondere nur bis zum Beginn der Verjüngung 32. Dadurch hat der sich zum Träger 27 hin anschließende Bereich des Stempels, insbesondere die Verjüngung 32, der Träger 27 und das Element 21 zur Seitenwand der Bohrung 15 hin ein geringes Spiel, wodurch dieser Bereich frei von seitlichen Berührungen ist.

Der Stempel 18, der Träger 27, der Widerstand 26 und das Element 21 können als vormontierbare Einheit vor der eigentlichen Montage des Drucksensors 11 hergestellt werden und anschließend in die Bohrung 15 des Gehäuses 10 eingeschraubt werden. Dadurch wird gleichzeitig eine Vorspannung des Elements 21 auf den Boden 16 oder mittelbar des Widerstands 26 erzeugt. Da aus Kostengründen die Kontaktstellen der einzelnen Bauteile, insbesondere des Elements 21, des Trägers 27, nicht geschliffen oder geläppt sind, werden die Setzvorgänge dieser Unebenheiten durch die Nachfederung der Verjüngung 32 nahezu ausgeglichen und die Vorspannkraft erhalten. Ferner können durch die Verjüngung 32 auch eventuelle Schiefstellungen des Stempels 18 beim Einsetzen ausgeglichen werden.

Die Wirkungsweise des Drucksensors 11 ist hinlänglich bekannt und deshalb hier nur kurz erläutert. Die vom Druck des Druckmediums im Boden 16 erzeugte Durchbiegung und die axiale Deformierung der Wand 16.1 werden mit Hilfe des Elements 21 gleichförmig auf den Widerstand 26 übertragen. Da das Element 21 nahezu punktförmig auf den Boden 16 anliegt und damit lokal plastische Deformationen auftreten, braucht die Innenseite des Bodens selbst nicht exakt plan und parallel zum Widerstand 26 ausgebildet zu sein. Dadurch wird die vom Druck erzeugte Durchbiegung des Bodens 16 und der axialen Deformation der Wand 16.1 gleichförmig und weitgehend fehlerfrei auf die Widerstandsschicht 26 übertragen. Diese Widerstandsschicht 26 verändert unter Druckeinwirkung seine elektrischen Eigenschaften, wodurch ein zum herrschenden Druck proportionales Signal erzeugt wird. Nichtlinearitäten des Meßwertes infolge unsymmetrischer Pressung des Widerstands 26 können aufgrund der punktförmigen Auflage des Elements 21 und der Verjüngung 32 verhindert werden.

Während beim Ausführungsbeispiel nach der Figur 1 die als federnder Bereich dienende Verjüngung 32 am Stempel 18 nach dem Träger 27 ausgebildet ist, befindet sich der federnde Bereich beim Ausführungsbeispiel nach der Figur 2 zwischen dem Boden 16 und dem Meßelement 21. In der Figur 2 ist hierbei zwischen dem Boden 16 und dem Element 21 ein Einsetzteil 36 angeordnet, das im Querschnitt etwa eine T-förmige Form aufweist. Das Einsetzteil 36 weist in der dem Boden 16 zugewandten Stirnseite 37 eine etwa mittige Vertiefung 38 auf. Mit Hilfe der Vertiefung 38 wird vermieden, daß der schwierig zu bearbeitende Mittelteil des Bodens 16 kontaktiert wird. An dem Grundkörper 39 des Einsetzteils 36 schließt sich zum Element 21 hin ein Bereich 40 mit einem geringeren Durchmesser sowohl als der des Grundkörpers 39 als auch als der des Elements 21 an. Mit Hilfe dieses Bereiches 40 wird wiederum eine federnde Eigenschaft, d.h. eine quer zur Längsachse des Stempels 18 wirkende Elastizität wie für den Stempel 18 erzeugt. Dadurch werden ebenfalls die oben beschriebenen federnden Eigenschaften erreicht. Die Wirkungsweise des Drucksensors nach der Figur 2 entspricht der nach der Figur 1.

Solche Drucksensoren lassen sich mit Vorzug bei der Druckmessung in Verteilerpumpen von Kraftstoffeinspritzsystemen sowie bei der Verbrennungsdruckmessung in Diesel- oder Ottomotoren einsetzen. Insbesondere ist eine Anwendung für hohe Drücke im Bereich von ca. 700 bar und für Serienprodukte möglich. Der Drucksensor kann in kostengünstigen und für die Massenproduktion geeigneten Arbeitsschritten hergestellt werden. Durch die nicht mehr notwendige plane oder ebene Ausgestaltung der Kontaktflächen zwischen den einzelnen Teilen des Sensors ergibt sich eine besonders preisgünstige Bauweise. Durch den erfindungsgemäßen Aufbau des Sensors erhält man aber eine nahezu lineare Meßkurve und einen weitgehend fehlerfreien Meßverlauf.

## Patentansprüche

1. Drucksensor (11), insbesondere zur Erfassung des Drucks eines von einer Wandung (14) begrenzten Mediums, mit mindestens einem Schichtwiderstand (26) in Gestalt eines Dickschicht- oder Dünnschichtwiderstands, welcher unter Druckeinwirkung seine elektrischen Eigenschaften ändert, ferner mit einem Gehäuse (10), das den Schichtwiderstand (26), dessen elektrische Zuleitungen (29) und einen am Träger (27) des Schichtwiderstands (26) anliegenden Stempel (18) lagert, und einen gegenüber dem Medium, dessen Druck bestimmt werden soll, abgeschlossenen Hohlraum (15) bildet, wobei der Schichtwiderstand (26) mit Hilfe eines balligen, aus druckübertragendem Material bestehenden Körpers (21) an einer Innenseite (16) des Hohlraums (15) anliegt, dadurch gekennzeichnet, daß der Stempel (18) mindestens an einer Stelle einen federnden Bereich (32) aufweist, so daß der Stempel (18) quer zu seiner Längsachse elastische Eigenschaften erhält, und daß der Stempel (18) mittel- oder unmittelbar in den Hohlraum (15) eingeschraubt ist.

2. Drucksensor nach Anspruch 1, dadurch gekennzeichnet, daß der Bereich (32) eine Verjüngung des Stempels (18) ist.

3. Drucksensor (11), insbesondere zur Erfassung des Drucks eines von einer Wandung (14) begrenzten Mediums, mit mindestens einem Schichtwiderstand (26) in Gestalt eines Dickschicht- oder Dünnschichtwiderstands, welcher unter Druckeinwirkung seine elektrischen Eigenschaften ändert, ferner mit einem Gehäuse (10), das einen Schichtwiderstand (26), dessen elektrischen Zuleitungen (29) und einen am Träger (27) des Schichtwiderstands (26) anliegenden Stempel (18) lagert, und einen gegenüber dem Medium, dessen Druck bestimmt werden soll, abgeschlossenen Hohlraum (15) bildet, wobei der Schichtwiderstand (26) mit Hilfe eines balligen, aus druckübertragendem Material bestehenden Körpers (21) an einer Innenseite (16) des Hohlraums (15) anliegt, dadurch gekennzeichnet, daß zwischen der Innenseite (16) des Hohlraums (15) und dem balligen Körper (21) ein Einsetzteil (36) vorhanden ist, das mindestens in einem Bereich (40) einen geringeren Durchmesser als der ballige Körper (21) aufweist so daß eine quer zur Längsachse des Stempels (18) wirkende Elastizität erzeugt wird, und daß der Stempel (18) mittel- oder unmittelbar in den Hohlraum (13) eingeschraubt ist.

4. Drucksensor nach Anspruch 3, dadurch gekennzeichnet, daß das Einsetzteil (36) im Querschnitt die Form eines T's aufweist.

5. Drucksensor nach Anspruch 3 oder 4, dadurch gekennzeichnet, daß das Einsetzteil (37) aus einem Material mit größerem thermischen Ausdehnungskoeffizienten besteht als der Träger (27).

6. Drucksensor nach einem der Ansprüche 1 bis 5, dadurch gekennzeichnet, daß der Träger (27) des Widerstands (26) eine geringere Höhe aufweist als der ballige Körper (21).

7. Drucksensor nach Anspruch 6, dadurch gekennzeichnet, daß der Träger (27) ca. 1 mm dick ist.

8. Drucksensor nach einem der Ansprüche 1 bis 7, dadurch gekennzeichnet, daß der Stempel (18) Längsnuten aufweist, in denen die Anschlußleitungen (29) des Widerstands (26) geführt werden.

## Claims

1. Pressure sensor (11), in particular for detecting the pressure of a medium bounded by a wall (14), having at least one film resistor (26) in the form of a thick-film or thin-film resistor which changes its electrical characteristics under the action of pressure, and further having a housing (10), which accommodates the film resistor (26), the electric supply leads (29) thereof and a plunger (18), bearing against the substrate (27) of the film resistor (26), and forms a cavity (15) which is closed with respect to the medium whose pressure is to be determined, the film resistor (26) bearing against an inner side (16) of the cavity (15) with the aid of a spherical member (21) consisting of a pressure-transmitting material, characterized in that, at least at one location, the plunger (18) has a resilient region (32) such that the plunger (18) acquires elastic properties transverse to its longitudinal axis, and in that directly the plunger (18) is screwed indirectly or into the cavity (15).

2. Pressure sensor according to Claim 1, characterized in that the region (32) is a taper in the plunger (18).

3. Pressure sensor (11), in particular for detecting the pressure of a medium bounded by a wall (14), having at least one film resistor (26) in the form of a thick-film or thin-film resistor which changes its electrical characteristics under the action of pressure, and further having a housing (10), which accommodates a film resistor (26), the electric supply leads (29) thereof and a plunger (18), bearing against the substrate (27) of the film resistor (26), and forms a cavity (15) which is closed with respect to the medium whose pressure is to be determined, the film resistor (26) bearing against an inner side (16) of the cavity (15) with the aid of a spherical member (21) consisting of a pressure-transmitting material, characterized in that present between the inner side (16) of the cavity (15) and the spherical member (21) is an insert (36) which, at least in one region (40), has a smaller diameter than the spherical member (21), with the result that an elasticity is produced which acts transverse to the longitudinal axis of the plunger (18), and in that the plunger (18) is screwed indirectly or directly into the cavity (15).

4. Pressure sensor according to Claim 3, characterized in that the insert (36) has a cross-section in the form of a T.

5. Pressure sensor according to Claim 3 or 4, characterized in that the insert (36) consists of a material having a larger coefficient of thermal expansion than the substrate (27).

6. Pressure sensor according to one of Claims 1 to 5, characterized in that the substrate (27) of the resistor (26) has a lower height than the spherical member (21).

7. Pressure sensor according to Claim 6, characterized in that the substrate (27) is approximately 1 mm thick.

8. Pressure sensor according to one of Claims 1 to 7, characterized in that the plunger (18) has longitudinal grooves in which the connecting leads (29) of the resistor (26) are guided.

## Revendications

1. Capteur de pression (11) en particulier pour détecter la pression d'un fluide limité par une paroi (14), avec au moins une résistance à couche (26) se présentant sous la forme d'une résistance à couche épaisse ou d'une résistance à couche mince, dont les propriétés électriques se modifient sous l'action de la pression, et en outre avec un boîtier (10) qui abrite la résistance à couche (26), ses lignes électrique (29) et un poinçon (18) qui repose sur le support (27) de la résistance à couche (26) et forme une cavité fermée (15) par rapport au fluide dont la pression doit être déterminée, la résistance à couche (26) reposant sur une face intérieure (16) de la cavité (15) à l'aide d'un corps bombé (21) réalisé en une matière qui transmet la pression,
caractérisé en ce que
- le poinçon (18) présente, au moins en un endroit, une zone qui fait ressort (32) de telle sorte que le poinçon (18) reçoit des propriétés élastiques perpendiculairement à son axe longitudinal, et
- le poinçon (18) est vissé directement ou indirectement dans la cavité (15).

2. Capteur de pression selon la revendication 1,
caractérisé en ce que
la zone (32) est un rétrécissement du poinçon (18).

3. Capteur de pression (11), en particulier pour détecter la pression d'un fluide limité par une paroi (14), avec au moins une résistance à couche (26) se présentant sous la forme d'une résistance à couche épaisse ou d'une résistance à couche mince, dont les propriétés électriques se modifient sous l'action de la pression, et en outre avec un boîtier (10) qui abrite la résistance à couche (26), ses lignes électrique (29) et un poinçon (18) qui repose sur le support (27) de la résistance à couche (26) et forme une cavité fermée (15) par rapport au fluide dont la pression doit être déterminée, la résistance à couche (26) reposant sur une face intérieure (16) de la cavité (15) à l'aide d'un corps bombé (21) réalisé en une matière qui transmet la pression,
caractérisé en ce qu'
- entre la face intérieure (16) de la cavité (15) et le corps bombé (21), il y a une pièce d'insertion (36) qui présente, au moins dans une zone (40), un diamètre plus faible que le corps bombé (21) de telle sorte que l'on a une élasticité qui agit perpendiculairement à l'axe longitudinal du poinçon (18), et
- le poinçon (18) est vissé directement ou indirectement dans la cavité (13).

4. Capteur de pression selon la revendication 3,
caractérisé en ce que
la pièce d'insertion (36) présente en section transversale la forme d'un T.

5. Capteur de pression selon la revendication 3 ou 4,
caractérisé en ce que
la pièce d'insertion (37) est réalisée en une matière qui a un coefficient de dilatation thermique plus grand que le support (27).

6. Capteur de pression selon l'une des revendications 1 à 5,
caractérisé en ce que
le support (27) de la résistance (26) présente une hauteur plus faible que le corps bombé (21).

7. Capteur de pression selon la revendication 6,
caractérisé en ce que
le support (27) a une épaisseur d'environ 1 mm.

8. Capteur de pression selon l'une des revendications 1 à 7,
caractérisé en ce que
le poinçon (18) présente des rainures longitudinales, dans lesquelles on fait passer les lignes de raccordement (29) de la résistance (26).
